(19) Europäisches Patentamt / European Patent Office / Office européen des brevets

(11) **EP 4 290 606 A1**

(12) **EUROPEAN PATENT APPLICATION**
published in accordance with Art. 153(4) EPC

(43) Date of publication:
**13.12.2023 Bulletin 2023/50**

(21) Application number: **23748935.6**

(22) Date of filing: **10.02.2023**

(51) International Patent Classification (IPC):
*H01M 4/134* $^{(2010.01)}$   *H01M 4/139* $^{(2010.01)}$

(86) International application number:
**PCT/CN2023/075339**

(87) International publication number:
**WO 2023/202189 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.04.2022 CN 202210432099**

(71) Applicants:
• **BTR NEW MATERIAL GROUP CO., LTD.**
  **Shenzhen, Guangdong 518106 (CN)**
• **Dingyuan New Energy Technology Co., Ltd.**
  **Huizhou, Guangdong 516227 (CN)**
• **Huizhou BTR New Material Technology Co., Ltd.**
  **Huizhou, Guangdong 516227 (CN)**

(72) Inventors:
• **XIE, Wei**
  **Shenzhen, Guangdong 518106 (CN)**
• **PANG, Chunlei**
  **Shenzhen, Guangdong 518106 (CN)**
• **DENG, Zhiqiang**
  **Shenzhen, Guangdong 518106 (CN)**
• **REN, Jianguo**
  **Shenzhen, Guangdong 518106 (CN)**
• **HE, Xueqin**
  **Shenzhen, Guangdong 518106 (CN)**

(74) Representative: **Noréns Patentbyrå AB**
**Box 10198**
**100 55 Stockholm (SE)**

(54) **NEGATIVE ELECTRODE MATERIAL AND PREPARATION METHOD THEREFOR, AND LITHIUM-ION BATTERY**

(57)   An anode material, a preparation method thereof, and a lithium ion battery provided. The anode material includes a core of a silicon-based material and a first coating layer coating on at least part of surface of the core of the silicon-based material, where first coating layer has an undulation y of 1≥y≥0.10, and the undulation y of the first coating layer is expressed by Formula (I):

$$y = 1 - \exp\left(-\frac{(R_{max}-R_{min})}{D50} \times C\right) \qquad (I)$$

where, $R_{max}$ is a maximum thickness (nm) of the first coating layer, $R_{min}$ is a minimum thickness (nm) of the first coating layer, D50 is a median particle size ($\mu$m) of the anode material, and C is a mass ratio (%) of the first coating layer in the anode material. The anode material of the present disclosure has properties of excellent conductivity, cycling performance, and rate performance, and can suppress occurrence of irreversible expansion.

```
mixing a coating material, a silicon-based material,      ⟩ S100
and an organic solvent to obtain a precursor

subjecting the precursor to a heat treatment to obtain    ⟩ S200
the anode material
```

FIG. 1

Processed by Luminess, 75001 PARIS (FR)

**Description**

**CROSS-REFERENCE TO RELATED APPLICATIONS**

The present disclosure claims the benefit of priority of Chinese Patent Application No. 2022104320997 filed with China Patent Office on April 22, 2022, entitled with "ANODE MATERIAL, PREPARATION METHOD THEREOF, AND LITHIUM ION BATTERY", the entire content of which is hereby incorporated by reference.

**TECHNICAL FIELD**

The present disclosure belongs to the technical field of anode material, and in particular, relates to an anode material, a preparation method thereof, and a lithium ion battery.

**BACKGROUND**

As the anode material of lithium ion battery, silicon-oxygen material has several problems that need to be solved urgently, including problems such as expansion and low rate caused by the natural disadvantages of silicon-based material itself. The expansion problem of silicon-oxygen material is mainly due to: the silicon-oxygen material with a large amount of intercalated lithium in itself will cause its volume expansion, and the huge volume change difference caused by de-intercalating lithium will destroy SEI film on surface of the silicon-oxygen material and expose the active surface to the electrolyte again, which will lead to the degradation and consumption of the electrolyte, and the redeposition of SEI, such that the pole piece will gradually expand. The rate problem is because of that lithium ions enter the interior of the silicon-oxygen system, and has a migration efficiency inside much lower than the interlayer migration in graphite, while the silicon-oxygen system intercalates lithium and internally migrating, lithium content changes lead to changes in the crystalline phase, while leading to a lower diffusion capacity of lithium.

Therefore, it is an urgent need for an anode material capable of low expansion and high rate performance.

**SUMMARY**

The present disclosure is to provide an anode material, a preparation method thereof, and a lithium ion battery. The anode material of the present disclosure can effectively suppress expansion, and improve the lithium intercalation efficiency and lithium intercalation depth, such that the powder conductivity, rate performance and cycling performance of the anode material have been greatly improved.

In a first aspect, an embodiment of the present disclosure provides an anode material. The anode material includes a core of a silicon-based material and a first coating layer coated on at least a surface of the core. The first coating layer has an undulation y of $1 \geq y \geq 0.10$, and the undulation y of the first coating layer is expressed by Formula (I):

$$y = 1 - \exp\left(-\frac{(R_{max} - R_{min})}{D50} \times C\right) \qquad (I)$$

in Formula (I), $R_{max}$ is a maximum thickness (nm) of the first coating layer, $R_{min}$ is a minimum thickness (nm) of the first coating layer, D50 is a median particle size ($\mu$m) of the anode material, and C is a mass ratio (%) of the first coating layer in the anode material.

In some embodiments, the anode material includes at least one of the following features (1) to (7):

(1) the core of the silicon-based material includes crystalline silicon and silicide, and the silicide includes at least one of $SiO_x$, silicon dioxide, silicate, and silicon alloy, where $1.5 \geq x \geq 0.5$;

(2) the core of the silicon-based material includes crystalline silicon and silicide, and the silicide includes at least one of $SiO_x$, silicon dioxide, silicate, and silicon alloy, where $1.5 \geq x \geq 0.5$, and the crystalline silicon has a grain size Dsi of 2.5 nm to 15 nm;

(3) the core of the silicon-based material includes crystalline silicon and silicide, and the silicide includes at least one of $SiO_x$, silicon dioxide, silicate, and silicon alloy, where $1.5 \geq x \geq 0.5$, and a grain size of the crystalline silicon is Dsi, a grain size of the silicate is $D_{silicate}$, and $D_{silicate}/D_{Si} = 0.3$ to 5.0;

(4) the core of the silicon-based material includes crystalline silicon and silicide, and the silicide includes at least one of $SiO_x$, silicon dioxide, silicate, and silicon alloy, where $1.5 \geq x \geq 0.5$, and a grain size of the crystalline silicon is Dsi, a grain size of the silicon alloy is $D_{silicon\ alloy}$, and $D_{silicon\ alloy}/D_{Si} = 0$ to 2.0;

(5) the core of the silicon-based material includes crystalline silicon and silicide, and the silicide includes at least

one of $SiO_x$, silicon dioxide, silicate, and silicon alloy, where $1.5 \geq x \geq 0.5$, and the silicon alloy includes at least one of silicon-iron alloy, silicon-silver alloy, silicon-nickel alloy, silicon-cobalt alloy, silicon-manganese alloy, silicon-indium alloy, silicon-rhodium alloy, silicon-ruthenium alloy, silicon-iridium alloy, silicon-platinum alloy, silicon-titanium alloy, and silicon-molybdenum alloy;

(6) the core of the silicon-based material includes crystalline silicon and silicide, and the silicide includes at least one of $SiO_x$, silicon dioxide, silicate, and silicon alloy, where $1.5 \geq x \geq 0.5$, and a cation of the silicate includes a metal element; and

(7) the core of the silicon-based material has a median particle size of 1 μm to 13 μm.

In some embodiments, the anode material includes at least one of the following features (1) to (8):

(1) the first coating layer includes a carbon layer, and a material of the carbon layer includes at least one of amorphous carbon, graphite, soft carbon, and hard carbon;

(2) a material of the organic polymer material layer includes at least one of polyamine compound, polyester compound, and polyolefin compound;

(3) a surface morphology of the first coating layer includes at least one of petal shape, stripe shape, cone shape, and granular shape;

(4) the first coating layer has a thickness of 10 nm to 500 nm;

(5) the first coating layer has pores with a pore diameter of 10 nm to 60 nm;

(6) the first coating layer has a porosity of 0.5% to 15%;

(7) the core of the silicon-based material includes a first dopant element, and the first dopant element includes at least one of lithium, magnesium, sodium, copper, platinum, iron, manganese, cobalt, nickel, indium, silver, gold, titanium, molybdenum, aluminum, palladium, calcium, iridium, chromium, gallium, rhodium, and ruthenium; and

(8) the first coating layer includes a second dopant element, and the second dopant element includes at least one of nitrogen, fluorine, phosphorus, sulfur, and boron.

In some embodiments, a second coating layer is further provided between the core of the silicon-based material and the first coating layer.

In some embodiments, the second coating layer includes at least one of the following features (1) to (3):

(1) a material of the second coating layer includes silicon alloy;

(2) a material of the second coating layer includes silicon alloy, and the silicon alloy includes at least one of silicon-iron alloy, silicon-silver alloy, silicon-nickel alloy, silicon-cobalt alloy, silicon-manganese alloy, silicon-indium alloy, silicon-rhodium alloy, silicon-ruthenium alloy, silicon-iridium alloy, silicon-platinum alloy, silicon-titanium alloy, and silicon-molybdenum alloy; and

(3) the second coating layer has a thickness of 0 nm to 10 nm but excluding 0 nm.

In some embodiments, the anode material includes at least one of the following features (1) to (5):

(1) in a Raman spectrum of the anode material measured by a Raman spectroscopy, a ratio of a strongest peak intensity $I_1$ of the anode material at 1300 $cm^{-1}$ to 1400 $cm^{-1}$ to a strongest peak intensity $I_2$ of the anode material at 1550 $cm^{-1}$ to 1650 $cm^{-1}$ satisfying $0 < I_1/I_2 < 3$, and a ratio of a strongest peak intensity $I_3$ of the anode material at 480 $cm^{-1}$ to 540 $cm^{-1}$ to the strongest peak intensity $I_1$ of the anode material at 1300 $cm^{-1}$ to 1400 $cm^{-1}$ satisfying $1 < I_3/I_1 < 4.5$;

(2) the anode material has a median particle size D50 of 1.5 μm to 15 μm;

(3) the anode material has a carbon content of 0.5% to 10%;

(4) the anode material has a powder conductivity of 0.1 S/m to 100 S/m; and

(5) the anode material has a specific surface area of 0.8 $m^2/g$ to 10 $m^2/g$.

In a second aspect, the present disclosure provides a preparation method of an anode material, including:

mixing an organic carbon source, a silicon-based material, and an organic solvent to obtain a precursor; and subjecting the precursor to a heat treatment to obtain the anode material.

In some embodiments, the preparation method includes at least one of the following features (1) to (7):

(1) the organic carbon source includes at least one organic substance selected from the group consisting of alkene, alkyne, alkane, alcohol, carboxylic acid, ester, aromatic ring, ketone, and ether;

(2) the organic carbon source includes at least one of p-dimethylbiphenyl, polyacrylic acid, phthalocyanine, diphenyl ether, polyvinyl acetate, ethyl stearate, and dopamine;

(3) the organic carbon source includes at least one organic substance of nitrile, amine, nitro compound, sulfide, fluoride, boride, and phosphide which containing at least one of hydroxyl, carboxyl, aromatic ring, branched alkyl, and carbonyl group;

(4) the organic carbon source includes at least one of 5-chloro-2-ethoxyphenylboronic acid, diphenyl sulfide, dopamine, and phthalocyanine;

(5) the organic carbon source includes an organic polymer material, and the organic polymer material includes at least one of polyamine compound, polyester compound, and polyolefin compound;

(6) the organic carbon source includes a metal coordination compound; and

(7) the organic carbon source includes a metal coordination compound, and the metal coordination compound includes at least one of copper phthalocyanine, aluminum acetylacetonate, tricyclic tin, and cobalt isopropoxide.

In some embodiments, the organic carbon source includes a metal coordination compound obtained by complexing an organic carbon material with a metal source.

In some embodiments, the method includes at least one of the following features (1) to (3):

(1) the metal source includes at least one of lithium source, magnesium source, sodium source, copper source, iron source, manganese source, cobalt source, nickel source, indium source, silver source, gold source, titanium source, molybdenum source, aluminum source, palladium source, calcium source, iridium source, platinum source, gallium source, chromium source, rhodium source, and ruthenium source;

(2) the organic carbon material includes at least one of alcohol, ether, aromatic compound, pyrrole, pyridine, alkane, ketone, carboxylic acid, nitrile, organic amine, nitro organic compound, sulfur-containing organic compound, and phosphorus-containing organic compound; and

(3) a molar ratio of the metal source to the organic carbon material is (0 to 1): 1 but excluding 0.

In some embodiments, the method includes at least one of the following features (1) to (6):

(1) the silicon-based material includes at least one of Si, $SiO_x$, and $SiO_2$, where $1.5 \geq x \geq 0.5$;

(2) a mass ratio of the silicon-based material to the organic carbon source is 1 :(0.05 to 0.3);

(3) a mass ratio of the silicon-based material to the organic solvent is 1 :(1 to 2.5);

(4) the organic solvent includes at least one of dimethyl carbonate, tetrahydrofuran, carbonate, toluene, benzene, diethyl ether, propylene oxide, ketone, and ethylene glycol dimethyl ether;

(5) the organic carbon source, the silicon-based material, and the organic solvent are mixed under stirring; and

(6) a duration for mixing the organic carbon source, the silicon-based material, and the organic solvent is 3 h to 24 h.

In some embodiments, after mixing the organic carbon source, the silicon-based material, and the organic solvent, the method further includes: a step of evaporating and crystallizing a mixed material.

In some embodiments, the method includes at least one of the following features (1) to (4):

(1) a temperature for evaporating and crystallizing is 30°C to 80°C;

(2) a duration for evaporating and crystallizing is 3 h to 10 h;

(3) the evaporating and crystallizing is performed in a first protective atmosphere; and

(4) the evaporating and crystallizing is performed in a first protective atmosphere, and the first protective atmosphere includes at least one of argon and nitrogen.

In some embodiments, the method includes at least one of the following features (1) to (5):

(1) the heat treatment has a temperature of 400°C to 1200°C;

(2) the heat treatment has a heating rate of 1°C/min to 5°C/min;

(3) the heat treatment has a duration of 3 h to 12 h;

(4) the heat treatment is performed in a second protective atmosphere, and the second protective atmosphere includes argon; and

(5) the heat treatment has a pressure of 0.11 MPa to 0.25 MPa.

In a third aspect, the present disclosure provides a lithium ion battery. The lithium ion battery includes the anode material according to the first aspect or the anode material prepared by the method according to the second aspect.

Compared with the prior art, the present disclosure has the following advantageous effects:

The first coating layer of the anode material of the present disclosure has a certain degree of undulation, showing scope and space that conductive network in the first coating layer can expand, and ensuring that in the process of expansion and shrinkage of the anode material, the contact area of the anode material with conductive agent can be increased during preparing slurry or electrode piece, maintaining electronic pathway connection between the core of the silicon-based material and the conductive agent, which is beneficial to improve conductivity, cycling performance, and rate performance of the anode material. The irreversible expansion is suppressed by stabilizing SEI interface, reducing pulverization, and reducing the occurrence of side reactions.

The present disclosure adopts the method of mixing the organic carbon source, the silicon-based material, and the organic solvent to uniformly deposit the organic carbon source on the surface of the silicon-based material in a liquid-phase environment, and heat-treating to make the surface of the core of the silicon-based material to form the first coating layer with a certain degree of undulation. The above first coating layer with a certain degree of undulation shows the scope and space that conductive network in the first coating layer can expand, and ensures that in the process of expansion and shrinkage of the anode material, the contact area of the anode material with the conductive agent can be increased during preparing slurry or electrode piece, so as to effectively improve conductivity, cycling performance, and rate performance of the anode material. In addition, the first coating layer can maintain influence range of the first coating layer during expansion process of the anode material, thereby reducing damage of SEI and suppressing expansion of the anode material. The preparation method of the present disclosure has simple process, and high product consistency, which is suitable for large-scale production. Compared with anode material formed by carbon material coating process alone, the anode material of the present disclosure has higher rate performance, simple process, and lower cost.

## BRIEF DESCRIPTION OF DRAWINGS

In order to more clearly illustrate the technical solutions of embodiments of the present disclosure or the prior art, the figures that need to be adopted in the description of the embodiments or the prior art will be briefly introduced below. Obviously, the figures in the following description are only for some embodiments of the present disclosure, those of ordinary skill in the art can also obtain other figures based on these figures without inventive effort.

FIG. 1 is a flowchart for preparing an anode material of the present disclosure;
FIG. 2 is EDS photos of the anode material prepared in Comparative Example 1;
FIG. 3 is EDS photos of the anode material prepared in Example 1 of the present disclosure;
FIG. 4 is SEM photos of the carbon layers of the anode materials prepared in Examples 1-4 and Comparative Example 2;
FIG. 5 is an XRD pattern of the anode material prepared in Example 1.

## DESCRIPTION OF EMBODIMENTS

In order to better understand the technical solutions of the present disclosure, the embodiments of the present disclosure will be described in detail below in conjunction with the figures.

It should be clear that the described embodiments are only some of the embodiments of the present disclosure, not all of the embodiments. Based on the embodiments in the present disclosure, all other embodiments obtained by persons of ordinary skill in the art without inventive efforts fall within the protection scope of the present disclosure.

In addition, the terms "first" and "second" are adopted for descriptive purposes only, and cannot be interpreted as indicating or implying relative importance or implicitly specifying the quantity of indicated technical features. Thus, a feature defined as "first" and "second" may explicitly or implicitly include one or more of these features.

For easy understanding of the present disclosure, specific terms are properly defined in the present disclosure. Unless otherwise defined herein, scientific and technical terms adopted in the present disclosure have the meanings commonly understood by those skilled in the art to which the present disclosure belongs.

The present disclosure provides an anode material. The anode material includes a core of a silicon-based material and a first coating layer coated on at least part of a surface of the core of the silicon-based material. The first coating layer has an undulation y of $1 \geq y \geq 0.10$, and the undulation y of the first coating layer is expressed by Formula (I):

$$y = 1 - \exp\left(-\frac{(R_{max}-R_{min})}{D50} \times C\right) \qquad (I)$$

In Formula (I): y is the undulation of the first coating layer, where $1 \geq y \geq 0.10$, $R_{max}$ is a maximum thickness (nm) of the first coating layer, $R_{min}$ is a minimum thickness (nm) of the first coating layer, D50 is a median particle size (μm)

of the anode material, and C is a mass ratio (%) of the first coating layer in the anode material. Among them, the maximum thickness $R_{max}=D_{min}$ (after the first coating layer is coated)-$D_{min}$ (before the first coating layer is coated), the minimum thickness $R_{min}=D_{max}$ (after the first coating layer is coated)-$D_{max}$ (before the first coating layer is coated), $D_{min}$ and $D_{max}$ are respectively a minimum particle size and a maximum particle size in particle size test.

In the above solution, the first coating layer of the present disclosure has a certain degree of undulation, showing the scope and space that conductive network in the first coating layer can expand, and ensuring that in the process of expansion and shrinkage of the anode material, the contact area of the anode material with conductive agent can be increased during preparing slurry or electrode piece, maintaining electronic pathway connection between the core of the silicon-based material and the conductive agent, which is beneficial to improve conductivity, cycling performance, and rate performance of the anode material. The irreversible expansion is suppressed by stabilizing SEI interface, reducing pulverization, and reducing the occurrence of side reactions.

It can be understood that the undulation of the first coating layer refers to a ratio of a maximum thickness of the first coating layer to a minimum thickness of the first coating layer in the first coating layer on surface of anode material powder considering particle size of the anode material and mass ratio of the first coating layer in the anode material. By weighted considering the particle size of the anode material and the mass ratio of the first coating layer, the larger of the ratio of the maximum thickness of the first coating layer to the minimum thickness of the first coating layer shows larger growth scope and space of conductive network in the first coating layer.

The value of y ranges from 0.10 to 1. It can be understood that the greater the difference in surface morphology of the first coating layer is and the more the space for expansion is, the closer y is to 1. The smoother the surface of the first coating layer is, the closer y is to 0. Specifically, the undulation y of the first coating layer can be 0.10, 0.20, 0.30, 0.40, 0.50, 0.60, 0.70, 0.80, 0.90, and 1, etc., or other values within the above range, which are not limited herein. The present disclosure controls the undulation of the first coating layer within the above range, forming the first coating layer with a special morphology, which can maintain 3D expanded morphology during charging and discharging process. Maintaining the morphology during cycling can keep a large conductive contact area, such that conductivity and rate performance of the anode material can be improved. Preferably, the range of the undulation y is $1{\geq}y{\geq}0.15$, and more preferably, $1{\geq}y{\geq}0.227$. Within the above range, the anode material can obtain a very obvious rate performance improvement due to the differentiated morphology.

In some embodiments, the core of the silicon-based material includes crystalline silicon and silicide, where the silicide includes at least one of $SiO_x$, silicon dioxide, silicate, and silicon alloy, where $1.5{\geq}x{\geq}0.5$.

In some embodiments, the crystalline silicon has a grain size Dsi of 2.5 nm-15 nm, specifically 2.5 nm, 5 nm, 7 nm, 9 nm, 10 nm, 12 nm, and 15 nm, etc., or other values within the above range, which are not limited herein. Controlling the grain size of the crystalline silicon within the above range is beneficial to improving capacity and cycling performance of the anode material.

In some embodiments, a grain size of the silicate is $D_{silicate}$, $D_{silicate}/D_{Si}$=0.3 to 5.0, and $D_{silicate}/D_{Si}$ specifically can be 0.3, 0.5, 1, 2, 3, 4, 5, etc., or other values within the above range, which are not limited herein. If $D_{silicate}/D_{Si}$ is greater than 5.0, the content of inactive components in the material is high, which is not conducive to improvement of capacity. If $D_{silicate}/D_{Si}$ is less than 0.3, it is not conducive to improvement of the initial efficiency of the material.

In some embodiments, a grain size of the silicon alloy is $D_{silicon\ alloy}$, $D_{silicon\ alloy}/D_{Si}$=0 to 2.0, and $D_{silicon\ alloy}/D_{Si}$ specifically can be 0, 0.5, 1, 1.5 and 2.0, etc., or other values within the above range, which are not limited herein. Controlling the grain sizes of the silicon alloy and the crystalline silicon within the above ranges is beneficial to improvement of the cycling performance of the material. If $D_{silicon\ alloy}/D_{Si}$ is greater than 2.0, it will result in a decrease in capacity of the material. It can be understood that when $D_{silicon\ alloy}/D_{Si}$ is 0, it indicates that the core of the silicon-based material does not contain the silicon alloy.

In some embodiments, the silicon alloy includes at least one of silicon-iron alloy, silicon-silver alloy, silicon-nickel alloy, silicon-cobalt alloy, silicon-manganese alloy, silicon-indium alloy, silicon-rhodium alloy, silicon-ruthenium alloy, silicon-iridium alloy, silicon-platinum alloy, silicon-titanium alloy, and silicon-molybdenum alloy. The presence of the silicon alloy can increase number of phases in the core of the silicon-based material, increasing area of interface among the phases, and reducing diffusion resistance of lithium ions, thus improving rate performance of the material. In addition, the presence of the silicon alloy can suppress expansion of the core of silicon-based materials to a certain extent, thus improving cycling performance of the material.

In some embodiments, a cation of the silicate includes a metal element. Specifically, the silicate can be, for example, lithium silicate, magnesium silicate, and sodium silicate, etc. The silicate core containing metal element can reduce impact of oxygen on lithium in the finished battery, reducing the occurrence of dead lithium, and improving initial efficiency of the material.

In some embodiments, the core of the silicon-based material has a median particle size of 1 $\mu$m to 13 $\mu$m. The median particle size of the core of the silicon-based material can be, for example, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, and 13 $\mu$m, etc., or other values within the above range, which are not limited herein.

In some embodiments, the first coating layer includes a carbon layer, and a material of the carbon layer includes at least one of amorphous carbon, graphite, soft carbon, and hard carbon.

In some embodiments, a surface morphology of the first coating layer includes at least one of petal shape, stripe shape, cone shape, and granular shape. The above irregular morphology of the first coating layer can expand action scope of conductive carbon. As an anode material, it can maintain connection with conductive network during cycling, thereby improving cycling performance of the material.

In some embodiments, the first coating layer has a thickness of 10 nm to 500 nm. The thickness of the first coating layer can be, for example, 10 nm, 50 nm, 100 nm, 200 nm, 300 nm, 400 nm, and 500 nm, etc., or other values within the above range, which are not limited herein.

In some embodiments, the first coating layer has pores. The presence of the pores can increase infiltration depth of electrolyte and shorten diffusion path of lithium ions, thereby improving rate performance of the material.

In some embodiments, the pore has a pore diameter of 10 nm to 60 nm. The pore diameter of the pore can specifically be 10 nm, 20 nm, 30 nm, 40 nm, 50 nm, and 60 nm, etc., or other values within the above range, which are not limited herein.

In some embodiments, the first coating layer has a porosity of 0.5% to 15%. The porosity of the first coating layer is 0.5%, 1%, 2%, 5%, 8%, 10%, 12%, and 15%, etc., or other values within the above range, which are not limited herein.

In some embodiments, the core of the silicon-based material includes a first dopant element. The first dopant element includes at least one of lithium, magnesium, sodium, copper, iron, manganese, cobalt, nickel, indium, silver, gold, titanium, molybdenum, aluminum, palladium, calcium, iridium, platinum, chromium, gallium, rhodium, and ruthenium. The presence of the above dopant elements can improve electronic structure of the core of the silicon-based material, improve conductivity of the core of the silicon-based material, improve rate performance of the anode material, and enhance ability of the anode material to intercalate lithium deeply.

In some embodiments, the first coating layer includes a second dopant element. The second dopant element includes at least one of nitrogen, fluorine, phosphorus, sulfur, and boron. The addition of the second dopant element can further improve conductivity of the first coating layer, improve contact surface of the material with conductive network, thereby improving cycling performance of the material.

It can be understood that the anode material contains the first dopant element and/or the second dopant element, such that content of the first coating layer is higher and the amount of residues is larger, which is beneficial to the core of the silicon-based material being coated by the first coating layer.

In some embodiments, a second coating layer is further provided between the core of the silicon-based material and the first coating layer.

In some embodiments, a material of the second coating layer includes silicon alloy. The second coating layer has high conductivity, and it is coated on surface of the core of the silicon-based material to realize bridging effect with the core of the silicon-based material, and can be end of conductive network of the core of the silicon-based material, such as to improve conductivity of the core of the silicon-based material, and then improve conductivity of the anode material, and finally improve rate performance and lithium intercalation depth of the anode material. In addition, the presence of the second coating layer can suppress expansion of the core of the silicon-based material to a certain extent, thereby limiting expansion due to lithium intercalation, and improving cycling performance of the material.

In some embodiments, the silicon alloy includes at least one of silicon-iron alloy, silicon-silver alloy, silicon-nickel alloy, silicon-cobalt alloy, silicon-manganese alloy, silicon-indium alloy, silicon-rhodium alloy, silicon-ruthenium alloy, silicon-iridium alloy, silicon-platinum alloy, silicon-titanium alloy, and silicon-molybdenum alloy.

In some embodiments, the second coating layer has a thickness of 0 nm to 10 nm but excluding 0 nm. The specific thickness of the second coating layer can be 0.1 nm, 0.5 nm, 1 nm, 2 nm, 3 nm, 4 nm, 5 nm, 6 nm, 7 nm, 8 nm, 9 nm, and 10 nm, etc., or other values within the above range, which are not limited herein.

In some embodiments, in a Raman spectrum of the anode material measured by Raman spectroscopy, a ratio of a strongest peak intensity $I_1$ of the anode material at 1300 $cm^{-1}$-1400 $cm^{-1}$ to a strongest peak intensity $I_2$ of the anode material at 1550 $cm^{-1}$-1650 $cm^{-1}$ satisfies $0<I_1/I_2<3$. Specifically, $I_1/I_2$ can be, for example, 0.05, 0.1, 0.5, 1, 2, and 2.5, etc, or other values within the above range, which are not limited herein. And a ratio of a strongest peak intensity $I_3$ of the anode material at 480 $cm^{-1}$ to 540 $cm^{-1}$ to the strongest peak intensity $I_1$ of the anode material at 1300 $cm^{-1}$ to 1400 $cm^{-1}$ satisfying $1<I_3/I_1<4.5$. $I_3/I_1$ can be, for example, 1.2, 1.5, 1.8, 2, 2.5, 2.8, 3.2, 3.5, 3.8, 4.0, 4.3, etc., or other values within the above range, which are not limited herein. The above peak intensity relationship is adopted to determine distribution of carbon component in the material. Controlling $I_1/I_2$ and $I_3/I_1$ within the above ranges can obtain better carbon coating effect and is beneficial to improve conductivity of the material.

In some embodiments, in a Raman spectrum of the anode material measured by Raman spectroscopy, a ratio of a peak intensity $I_{1350}$ at 1350 $cm^{-1}$ to a peak intensity $I_{1580}$ at 1580 $cm^{-1}$ of the anode material satisfies $0<I_{1350}/I_{1580}<3$, and a ratio of a peak intensity $I_{510}$ at 510 $cm^{-1}$ to a peak intensity $I_{1350}$ at 1350 $cm^{-1}$ of the anode material satisfies $1<I_{510}/I_{1350}<4.5$.

In some embodiments, the anode material has a median particle size D50 of 1.5 $\mu$m to 15 $\mu$m. The median particle size of the anode material can be, for example, 1.5 $\mu$m, 3 $\mu$m, 5 $\mu$m, 10 $\mu$m, 12 $\mu$m, 13 $\mu$m, 14 $\mu$m, and 15 $\mu$m, etc., or other values within the above range, which are not limited herein. Controlling the median particle size D50 of the anode material within the above range indicates that the coating layer of the anode material is complete, and has good repeatability, and conductivity of the coating layer is higher.

In some embodiments, the anode material has a carbon content of 0.5% to 10%. The carbon content of the anode material can be, for example, 0.5%, 1%, 2%, 3%, 5%, 7%, 8%, and 10%, etc., or other values within the above range, which are not limited herein.

In some embodiments, the anode material has a powder conductivity of 0.1 S/m to 100 S/m. The powder conductivity of the anode material can be, for example, 0.1 S/m, 1 S/m, 5 S/m, 10 S/m, 20 S/m, 30 S/m, 50 S/m, 60 S/m, 70 S/m, 80 S/m, 90 S/m, and 100 S/m, etc., or other values within the above range, which are not limited herein.

In some embodiments, the anode material has a specific surface area of 0.8 $m^2$/g to 10 $m^2$/g. The specific surface area of the anode material can be, for example, 0.8 $m^2$/g, 1 $m^2$/g, 2 $m^2$/g, 3 $m^2$/g, 4 $m^2$/g, 5 $m^2$/g, 6 $m^2$/g, 7 $m^2$/g, 8 $m^2$/g, 9 $m^2$/g, and 10 $m^2$/g, etc., or other values within the above range, which are not limited herein.

The embodiment of the present disclosure also provides a preparation method of the anode material, including:

Step S100, mixing an organic carbon source, a silicon-based material, and an organic solvent to obtain a precursor; and
Step S200, subjecting the precursor to a heat treatment to obtain the anode material.

In the above technical solution, the present disclosure adopts the method of mixing the organic carbon source, the silicon-based material, and the organic solvent to uniformly deposit the organic carbon source on the surface of the silicon-based material in a liquid-phase environment, and heat-treating to make the surface of the core of the silicon-based material to form the first coating layer with a certain degree of undulation. The above first coating layer with a certain degree of undulation shows the scope and space that conductive network in the first coating layer can expand, and ensures that in the process of expansion and shrinkage of the anode material, the contact area of the anode material with the conductive agent can be increased during preparing slurry or electrode piece, so as to effectively improve conductivity, cycling performance, and rate performance of the anode material. In addition, the first coating layer can maintain influence range of the first coating layer during expansion process of the anode material, thereby reducing the damage of SEI and suppressing expansion of the anode material. The preparation method of the present disclosure has simple process, and high product consistency, which is suitable for large-scale production. Compared with anode material formed by carbon material coating process alone, the anode material of the present disclosure has higher rate performance, simple process, and lower cost.

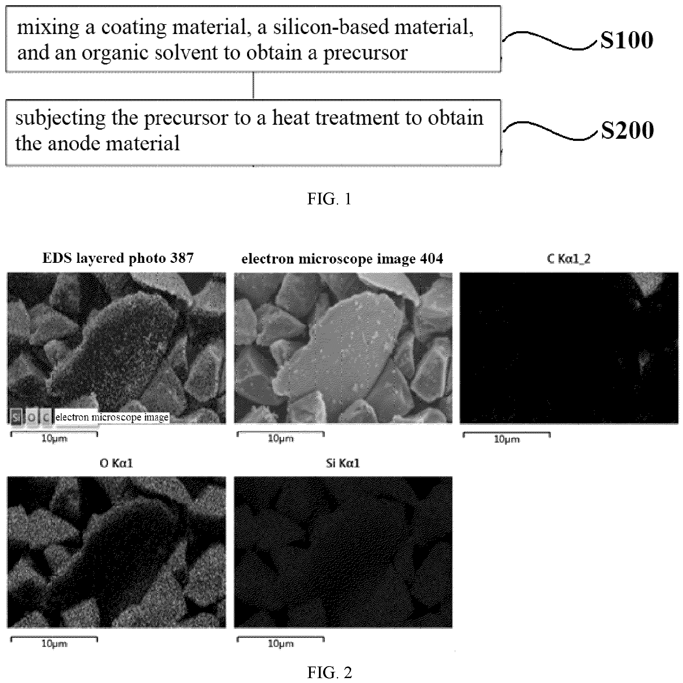

The preparation method of the present disclosure is specifically introduced below in conjunction with embodiments, as shown in FIG. 2, the preparation method of the anode material of the present disclosure includes the following steps:

Step S 100, mixing an organic carbon source, a silicon-based material, and an organic solvent to obtain a precursor.

In some embodiments, the organic carbon source can be dispersed in the organic solvent, and then the silicon-based material is added, which is beneficial to uniformity of dispersion of the organic carbon source.

In some embodiments, the organic carbon source includes at least one organic substance selected from a group consisting of alkene, alkyne, alkane, alcohol, carboxylic acid, ester, aromatic ring, ketone, and ether. The above organic substances can have a certain crystal form, and are soluble in an organic solvent. In the present disclosure, by using the organic carbon sources with different organic end functional groups, it is adsorbed on surface of the silicon-based material and meantime accumulated on the surface of the silicon-based material to form an original carbon layer skeleton of the surface coating layer. The above organic carbon source can be, for example, p-dimethylbiphenyl, polyacrylic acid, phthalocyanine, diphenyl ether, polyvinyl acetate, ethyl stearate, dopamine, etc.

In some embodiments, the organic carbon source includes at least one organic substance of nitrile, amine, nitro compound, sulfide, fluoride, boride, and phosphide which containing at least one of hydroxyl, carboxyl, aromatic ring, branched alkyl, and carbonyl group. The presence of the above organic substance can improve conductivity of the material. The above organic carbon source can be, for example, 5-chloro-2-ethoxyphenylboronic acid, diphenyl sulfide, dopamine, and phthalocyanine, etc.

In some embodiments, the organic carbon source includes an organic polymer material. The organic polymer material includes at least one of polyamine compound, polyester compound, and polyolefin compound. For example, the organic polymer material includes polyvinyl chloride, polydopamine, and polyethylene terephthalate, etc. The presence of the above organic substances can improve conductivity of the material.

In some embodiments, the organic carbon source includes a metal coordination compound. The metal coordination compound includes at least one of copper phthalocyanine, aluminum acetylacetonate, tricyclic tin, and cobalt isopropoxide, and of course other metal coordination compound can also be chose. It can be understood that in the case of the organic carbon source using the metal coordination compound, the prepared anode material is doped with a metal element, which can effectively avoid pulverization of material particle.

In some embodiments, the metal coordination compound can also be obtained by complexing an organic carbon material with a metal source.

The special morphology of the first coating layer of the present disclosure can be better formed by stacking and interacting with a suitable metal-organic carbon source (metal part-organic part) during synthesis process. The applicant found that using formula: $y=1-exp(-(R_{max}-R_{min})/D50*C)$ can describe above stacking degree, and describe to what extent it can play the role of expanding conductive area.

In some embodiments, the metal sources include at least one of lithium source, magnesium source, sodium source, copper source, iron source, manganese source, cobalt source, nickel source, indium source, silver source, gold source, titanium source, molybdenum source, aluminum source, palladium source, calcium source, iridium source, platinum source, gallium source, chromium source, rhodium source, and ruthenium source. The metal source can be, for example, metal lithium, metal magnesium, and metal copper, etc. It can be understood that metals with different activities have different effects on the undulation y of the first coating layer. The applicant found that the greater the activity of the metal, the greater the value of the undulation y of the first coating layer is, and the more conductivity, cycling performance and rate performance the anode material can be improved.

In some embodiments, the organic carbon material includes at least one of alcohol, ether, aromatic compound, pyrrole, pyridine, alkane, ketone, carboxylic acid, nitrile, organic amine, nitro organic compound, sulfur-containing organic compound, and phosphorus-containing organic compound. It can be understood that the organic carbon material can be the same as the above organic carbon source.

In some embodiments, a molar ratio of the metal source to the organic carbon material is (0 to 1):1 but excluding 0. Specifically, the molar ratio of the metal source to the organic carbon material can be 0.1:1, 0.2:1, 0.3:1, 0.4:1, 0.5:1, 0.6:1, 0.7:1, 0.8:1, 0.9:1, and 1:1, etc., or other values within the above range, which are not limited herein. Controlling the molar ratio of the metal source to the organic carbon material within the above range is conducive to full complexation of the metal and the organic carbon material, thereby increasing deposition amount of the organic carbon material, and preventing excess metal impurities in the organic carbon material from remaining.

In some embodiments, the silicon-based material includes at least one of Si, $SiO_x$, and $SiO_2$, where $1.5 \geq x \geq 0.5$.

In some embodiments, a mass ratio of the silicon-based material to the organic carbon source is 1:(0.05 to 0.3). The mass ratio of the silicon-based material to the organic carbon source can be, for example, 1:0.05, 1:0.1, 1:0.2, and 1: 0.3, etc., or other values within the above range, which are not limited herein.

In some embodiments, a mass ratio of the silicon-based material to the organic solvent is 1:(1 to 2.5). The mass ratio of the silicon-based material to the organic solvent can be, for example, 1:1, 1: 1.5, 1:2, and 1: 2.5, etc., or other values within the above range, which are not limited herein.

In some embodiments, the organic solvent includes at least one of dimethyl carbonate, tetrahydrofuran, carbonate, toluene, benzene, diethyl ether, propylene oxide, ketone, and ethylene glycol dimethyl ether.

In some embodiments, a duration for mixing the organic carbon source, the silicon-based material, and the organic solvent is 3 h to 24 h. Specifically, the mixing duration can be, for example, 3 h, 4 h, 5 h, 7 h, 8 h, 10 h, 12 h, 16 h, 18 h, 20 h, 22 h, and 24 h, etc., or other values within the above range, which are not limited herein. During the above mixing duration, the organic carbon source can be saturated adsorbed on the surface of the silicon-based material.

In some embodiments, the organic carbon source, the silicon-based material, and the organic solvent are mixed under stirring. The stirring is to disperse the silicon-based material uniformly and prevent it from depositing at the bottom of the organic solvent. The present disclosure does not limit the way of stirring, for example, it can be magnetic stirring, and paddle stirring, etc.

In some embodiments, after mixing the organic carbon source, the silicon-based material, and the organic solvent, the method further includes: a step of evaporating and crystallizing a mixed material. Specifically, the organic carbon source, the silicon-based material, and the organic solvent are mixed, and reacted for 3 h to 24 h under stirring, and a precursor is obtained by evaporating and crystallizing after reaction. The evaporating and crystallizing is to remove residual organic solvent. The evaporating and crystallizing process is set depends on different organic solvent.

In some embodiments, a temperature for evaporating and crystallizing is 30°C to 80°C. The temperature for evaporating and crystallizing can be, for example, 30°C, 40°C, 50°C, 60°C, 70°C, and 80°C, etc., or other values within the above range, which are not limited herein. Preferably, the evaporating and crystallizing can be achieved by step heating, which can make the organic carbon source orderly deposited on the surface of the material while evaporating part of the solvent, which is beneficial to the forming of the surface morphology of the first coating layer in subsequent heat treatment process.

In some embodiments, a duration for evaporating and crystallizing is 3 h to 10 h. The duration for evaporating and crystallizing can be, for example, 3 h, 4 h, 5 h, 6 h, 7 h, 8 h, 9 h, and 10 h, etc., or other values within the above range, which are not limited herein.

In some embodiments, the evaporating and crystallizing is performed in a first protective atmosphere, and the first protective atmosphere includes at least one of argon and nitrogen.

In some embodiments, the evaporating and crystallizing is performed under stirring, and continuous stirring during the evaporating and crystallizing process can be beneficial to uniformity of deposition and adsorption of solute.

In the present disclosure, the organic carbon source, the silicon-based material, and the organic solvent are mixed to form a surface crystallization framework of organic substance through effective crystallizing and stirring processes, so as to obtain a target material precursor.

Step S200, subjecting the precursor to a heat treatment to obtain the anode material.

In the above step, during the heat treatment, the organic carbon source is deposited on the surface of the silicon-based material to form the first coating layer through the heat treatment. The selection of raw materials and heat treatment make the first coating layer after heat treatment to show a special morphology (petal shape, stripe shape, cone shape, and granular shape, etc.) and porous structure, which can improve contact area of the core of the silicon-based material with conductive network, and further improve conductivity.

In some embodiments, the heat treatment of the present disclosure can form a coating layer with special morphology. Compared with flat surface prepared by conventional chemical vapor deposition coating, in the present disclosure, the carbon layer is grown from an organic carbon source, and its surface morphology is irregular. For example, it can be at least one of petal shape, stripe shape, cone shape, and granular shape.

In some embodiments, the heat treatment temperature has a temperature of 400°C to 1200°C. The temperature of the heat treatment can be, for example, 400°C, 500°C, 600°C, 700°C, 800°C, 900°C, 1000°C, 1100°C, and 1200°C, etc., or other values within the above range, which are not limited herein. If the temperature of the heat treatment is lower than 400°C, the heat treatment will be incomplete, bonding force among organic molecules will be weak, and the carbon layer will be fragile and easily destroyed. If the temperature of the heat treatment is higher than 1200°C, the core will be changed, homogeneity of each components of the core will be destroyed, conductivity of the core will be reduced, and initial effect will be reduced.

In some embodiments, the heat treatment has a heating rate of 1°C/min to 5°C/min. The heating rate of the heat treatment can be, for example, 1°C/min, 2°C/min, 3°C/min, 4°C/min, and 5°C /min, etc., or other values within the above range, which are not limited herein.

In some embodiments, the heat treatment has a duration of 3 h to 12 h. The duration of the heat treatment can be, for example, 3 h, 4 h, 5 h, 6 h, 7 h, 8 h, 9 h, 10 h, 11 h, and 12 h, etc., or other values within the above range, which are not limited herein.

In some embodiments, the heat treatment is performed under pressuring. The pressure of the heat treatment is 0.11 MPa to 0.25 MPa. Specifically, the pressure of the heat treatment can be 0.11 Mpa, 0.15 Mpa, 0.17 Mpa, 0.2 Mpa, 0.23 Mpa, and 0.25 Mpa, etc., or other values within the above range, which are not limited herein.

In some embodiments, for the second protective atmosphere, a gas that does not react with the organic carbon source is selected as the protective gas. The heat treatment is performed in the second protective atmosphere, and the second protective atmosphere includes argon.

In the present disclosure, the structures of the anode materials obtained by heat treatment of different raw materials are different. Specifically:

When the selected organic carbon source includes at least one organic substance selected from a group consisting of alkene, alkyne, alkane, alcohol, carboxylic acid, ester, aromatic ring, ketone, and ether, the anode material obtained through heat treatment includes a core of the silicon-based material and a carbon layer coating the core of the silicon-based material.

When the selected organic carbon source includes at least one organic substance of nitrile, amine, nitro compound, sulfide, fluoride, boride, and phosphide which containing at least one of hydroxyl, carboxyl, aromatic ring, branched alkyl, and carbonyl group, or at least one organic substance of polyamine compound, polyester compound, and polyalkene compound, the carbon end of the organic substance contains elements such as N, S, B, and P, which are doped into carbon layer through the heat treatment. The anode material includes a core of the silicon-based material and a carbon layer coating the core of the silicon-based material, where the carbon layer contains a second dopant element, and the second dopant element can improve conductivity of the carbon coating layer.

When a metal coordination compound is selected as the organic carbon source, the metal coordination compound can be directly selected from an existing metal complex organic compound, or can be obtained by complexing the organic carbon material with a metal source. The structures of the anode materials obtained by heat treatment of the complexes containing different metals are different. Specifically:
When the metal coordination compound contains a metal element with strong reducibility, it is easily introduced into the core of the silicon-based material to form a corresponding metal silicate during the heat treatment. The obtained anode material includes a core of the silicon-based material and a carbon coating layer coated on the core of the silicon-based material, where the core of the silicon-based material includes silicate formed by at least one of Si, $SiO_x$ ($1.5 \geq x \geq 0.5$), and $SiO_2$.

When the metal coordination compound contains a metal element with weak reducibility, the metal element will react with nano-silicon inside the silicon-oxygen to form a silicon alloy during the heat treatment, and the obtained anode material has two coating layers. Specifically, the anode material includes a core of the silicon-based material, where at least part of surface of the core of the silicon-based material is coated with an alloy layer, and at least part of surface of the alloy layer is coated with a carbon layer. The existence of the alloy layer can improve conductivity of the core of the silicon-based material and improve rate performance of the material. For example, when the metal source is Cu, the metal coordination compound is a Cu complex, and the Cu complex will cause surface carbon layer to form a "petal-like" multilayer and porous structure. The layer structure makes contact area of conductive carbon layer increased, which can increase extension distance and influence scope of the carbon layer. On the other hand, the porous structure can make electrolyte infiltrate into the carbon layer, shortening transfer distance of lithium ions. In addition, SEI of the carbon layer is formed in the porous structure, and extended-out piece carbon cannot be covered by SEI and still maintain contacting with conductive agent in the core, thereby ensuring rate performance. When the metal source is Al, the metal coordination compound is an Al complex, and the Al complex can make surface carbon layer have a certain thick fiber structure, which is also beneficial to, as protruding points of the conductive layer, maintain contact points of the conductive layer during particles expanding and shrinking, while form SEI layer.

To sum up, in the present disclosure, an organic carbon source is used to deposit on surface of solid powder (silicon-based material) to form a special crystal framework, and then a high-temperature heat treatment is performed to obtain a special shape for outer coating layer. The dopant element can be introduced into and distributed the whole particle, including the core of the silicon-based material, the interface between the core of the silicon-based material and the first coating layer, and the first coating layer, through the heat treatment of the organic substance. Through the above process, optimization of morphology of the coating layer can be achieved, and meanwhile, the dopant element can be introduced into interior of the material. Through a simple process, performances of the anode material can be greatly improved. The special morphology of the organic carbon source after heat treatment can expand contact area with conductive carbon, thereby improving cycling performance and conductivity, and can maintain influence range of the coating layer during expansion process of the material, thereby reducing damage of SEI and suppressing expansion. The dopant elements can better change and improve electrochemical properties of the material from the inside. The preparation method of the present disclosure has a temperate synthesis environment, high product yield, and short synthesis process flow, which effectively reduces production costs on the basis of ensuring high electrochemical performance. It is suitable for industrial large-scale production, and has extremely high economic value.

In a third aspect, the present disclosure provides a lithium ion battery, including the anode material prepared by the above preparation method.

Although the Embodiments of the present disclosure are described, the present disclosure is not limited to these embodiments unless the gist is exceeded.

Example 1

After adding p-dimethylbiphenyl (2 g), SiO (10 g), and metal lithium (1 g) into ethylene glycol dimethyl ether (10 g), the anode material was obtained by stirring magnetically for 12 h, heating by water bath thermostat at 50°C for 3 h, 70°C for 3 h, and 85°C for 3 h, then stirring at room temperature to dry and evaporate solvent, and carbonization heat treating at 800°C for 6 h under argon gas protection atmosphere.

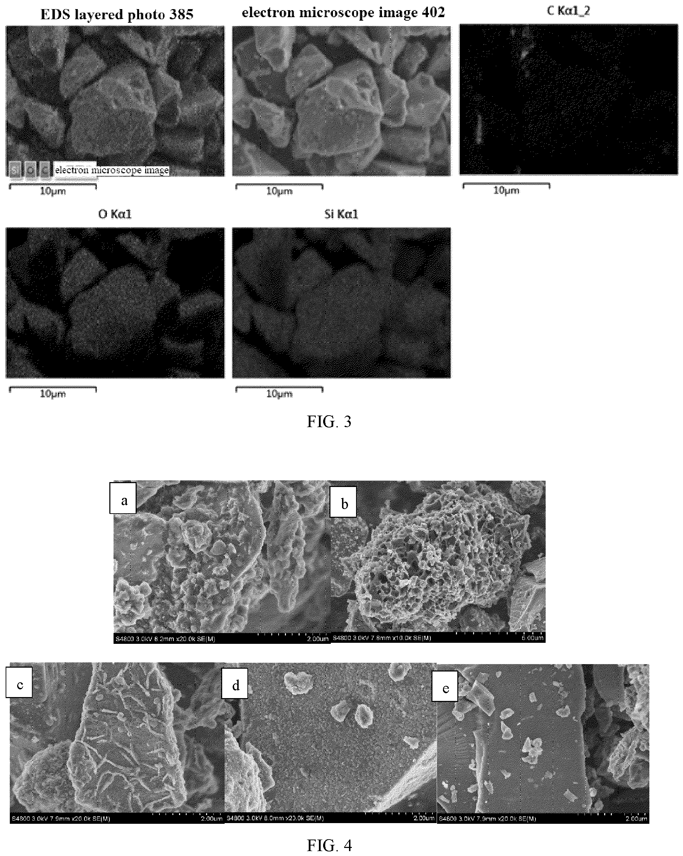

The obtained anode material includes a core of the silicon-based material containing Si, $SiO_x$ ($1.5 \geq x \geq 0.5$), and lithium silicate, and a carbon layer coated on surface of the core of the silicon-based material. As shown in FIG. 4(a), the carbon layer has a morphology of cone-shaped structure. The anode material has a median particle size of 5.0 $\mu$m, a powder conductivity of 10.9 S/m, $I_{1350}/I_{1580}=1.3$, and $I_{510}/I_{1350}=4.12$.

Example 2

After adding SiO (10 g) and copper phthalocyanine (1 g) into ethylene glycol dimethyl ether (10 g), the anode material was obtained by stirring magnetically for 12 h, heating by water bath thermostat at 50°C for 3 h, 70°C for 3 h, and 85°C for 3 h, then filtering under reduced pressure, purging with dry argon until completely dry, and carbonizing at 800°C for 6 h under protective gas.

The obtained anode material includes a core of the silicon-based material containing Si, $SiO_x$ ($1.5 \geq x \geq 0.5$) and Si-Cu alloy, and a carbon layer coated on surface of the core of the silicon-based material. As shown in FIG. 4(b), the carbon layer has a morphology of petal-like structure. The anode material has a median particle size of 5.0 $\mu$m, a powder conductivity of 13.7 S/m, $I_{1350}/I_{1580}=1.9$, and $I_{510}/I_{1350}=3.99$.

Example 3

After adding SiO (10 g) and aluminum acetylacetonate (1 g) into ethylene glycol dimethyl ether (10 g), the anode material was obtained by stirring magnetically for 12 h, heating by water bath thermostat at 50°C for 3 h, 70°C for 3 h, and 85°C for 3 h, then filtering under reduced pressure, purging with dry argon until completely dry, and carbonizing at 800°C for 6 h under protective gas.

The obtained anode material includes a core of the silicon-based material containing Si, $SiO_x$ ($1.5 \geq x \geq 0.5$), and aluminum silicate, and a carbon layer coated on the surface of the core of the silicon-based material. As shown in FIG. 4(c), the carbon layer has a morphology of striped structure. The anode material has a median particle size of 5.0 μm, a powder conductivity of 10.9 S/m, $I_{1350}/I_{1580}=1.4$, and $I_{510}/I_{1350}=4.32$.

Example 4

After adding SiO (10 g) and polyacrylic acid (1 g) to water (10 g), the anode material was obtained by stirring magnetically for 12 h, heating by water bath thermostat at 50°C for 3 h, 70°C for 3 h, and 85°C for 3 h, then filtering under reduced pressure, purging with dry argon until completely dry, and carbonizing at 800°C for 6 h under protective gas.

The obtained anode material includes a core of the silicon-based material containing Si, and $SiO_x$ ($1.5 \geq x \geq 0.5$), and a carbon layer coated on surface of the core of the silicon-based material. As shown in FIG. 4(d), the carbon layer has a morphology of granular structure. The anode material has a median particle size of 5.0 μm, a powder conductivity of 11.0 S/m, $I_{1350}/I_{1580}=1.4$, and $I_{510}/I_{1350}=4.32$.

Example 5

After adding SiO (10 g) and 5-chloro-2-ethoxyphenylboronic acid (2 g) to water (10 g), the anode material was obtained by stirring magnetically for 12 h, heating by water bath thermostat at 50°C for 3 h, 70°C for 3 h, and 85°C for 3 h, then filtering under reduced pressure, purging with dry argon until completely dry, and carbonizing at 800°C for 6 h under protective gas.

The obtained anode material includes a core of the silicon-based material containing Si, $SiO_x$ ($1.5 \geq x \geq 0.5$), and $B_2O_3$-$SiO_2$, and a carbon layer coated on surface of the core of the silicon-based material, where the carbon layer contains boron element. The carbon layer has a morphology of fine-grained distribution structure. The anode material has a median particle size of 5.0 μm, a powder conductivity of 10.6 S/m, $I_{1350}/I_{1580}=1.2$, and $I_{510}/I_{1350}=3.92$.

Example 6

After adding SiO (10 g) and diphenyl sulfide (2 g) to ethylene glycol dimethyl ether (10 g), the anode material was obtained by stirring magnetically for 12 h, heating by water bath thermostat at 50°C for 3 h, 70°C for 3 h, and 85°C for 3 h, then filtering under reduced pressure, purging with dry argon until completely dry, and carbonizing at 800°C for 6 h under protective gas.

The obtained anode material includes a core of the silicon-based material containing Si, $SiO_x$ ($1.5 \geq x \geq 0.5$), silicate, and composite silicate, and a carbon layer coated on surface of the core of the silicon-based material, where the carbon layer contains sulfur element. The carbon layer has a morphology of flat morphological structure. The anode material has a median particle size of 5.0 μm, a powder conductivity of 10.3 S/m, $I_{1350}/I_{1580}=1.3$, and $I_{510}/I_{1350}=3.82$.

Example 7

After adding p-dimethylbiphenyl (2 g), SiO (10 g), and metal sodium (1 g) into ethylene glycol dimethyl ether (10 g), the anode material was obtained by stirring magnetically for 12 h, stirring at room temperature to dry and evaporate solvent, and carbonization heat treating at 800°C for 6 h under argon gas protection atmosphere.

The obtained anode material includes a core of the silicon-based material containing Si, $SiO_x$ ($1.5 \geq x \geq 0.5$), and sodium silicate, and a carbon layer coated on surface of the core of the silicon-based material. The carbon layer has a morphology of hilly and large granular structure. The anode material has a median particle size of 5.0 μm, a powder conductivity of 10.1 S/m, $I_{1350}/I_{1580}=1.1$, and $I_{510}/I_{1350}=4.41$.

Example 8

After adding SiO (10 g), copper phthalocyanine (1 g), and nickel phthalocyanine (1 g) into ethylene glycol dimethyl ether (10 g), the anode material was obtained by stirring magnetically for 12 h, stirring at room temperature to dry and evaporate solvent, and carbonization heat treating at 800°C for 6 h under argon gas protection atmosphere.

The obtained anode material includes a core of the silicon-based material containing Si and $SiO_x$ ($1.5 \geq x \geq 0.5$). The surface of the core of the silicon-based material is coated with a mixed layer of silicon-copper alloy and silicon-nickel alloy, and a carbon layer coated on surface of the mixed layer. The carbon layer has a morphology of stripe-like structure. The anode material has a median particle size of 5.0 $\mu$m, a powder conductivity of 11.9 S/m, $I_{1350}/I_{1580}$=1.5, and $I_{510}/I_{1350}$=3.81.

Example 9

The example was conducted as Example 5 excepting that the temperature of the carbonizing was 350°C.
The obtained anode material includes a core of the silicon-based material containing Si, $SiO_x$ (1.5≥x≥0.5), and $B_2O_3$-$SiO_2$, and a carbon layer coated on surface of the core of the silicon-based material, where the carbon layer contains boron element. The carbon layer has a morphology of flat morphology structure. The anode material has a median particle size of 5.0 $\mu$m, a powder conductivity of 9.3 S/m, $I_{1350}/I_{1580}$=1.1, and $I_{510}/I_{1350}$=4.12.

Example 10

The example was conducted as Example 5 excepting that the temperature of the carbonizing was 400°C.
The obtained anode material includes a core of the silicon-based material containing Si, $SiO_x$ (1.5≥x≥0.5), and $B_2O_3$-$SiO_2$, and a carbon layer coated on surface of the core of the silicon-based material, where the carbon layer contains boron element. The carbon layer has a morphology of flat morphology structure. The anode material has a median particle size of 5.0 $\mu$m, a powder conductivity of 9.6 S/m, $I_{1350}/I_{1580}$=1.21, and $I_{510}/I_{1350}$=4.19.

Example 11

The example was conducted as Example 5 excepting that the temperature of the carbonizing was 1000°C.
The obtained anode material includes a core of the silicon-based material containing Si, $SiO_x$ (1.5≥x≥0.5), and $B_2O_3$-$SiO_2$, and a carbon layer coated on surface of the core of the silicon-based material, where the carbon layer contains boron element. The carbon layer has a morphology of fine granular structure. The anode material has a median particle size of 9.9 S/m, $I_{1350}/I_{1580}$=1.0, and $I_{510}/I_{1350}$=3.98.

Example 12

The example was conducted as Example 5 excepting that the temperature of the carbonizing was 1200°C.
The obtained anode material includes a core of the silicon-based material containing Si, $SiO_x$ (1.5≥x≥0.5), and $B_2O_3$-$SiO_2$, and a carbon layer coated on surface of the core of the silicon-based material, where the carbon layer contains boron element. The carbon layer has a morphology of fine granular structure. The anode material has a median particle size of 10.3 S/m, $I_{1350}/I_{1580}$=1.2, and $I_{510}/I_{1350}$=3.7.

Example 13

The example was conducted as Example 5 excepting that the temperature of the carbonizing was 1300°C.
The obtained anode material includes a core of the silicon-based material containing Si, $SiO_x$ (1.5≥x≥0.5), and $B_2O_3$-$SiO_2$, and a carbon layer coated on surface of the core of the silicon-based material, where the carbon layer contains boron element. The carbon layer has a morphology of fine granular structure. The anode material has a median particle size of 9.5 S/m, $I_{1350}/I_{1580}$=1.2, and $I_{510}/I_{1350}$=4.22.

Example 14

The example was conducted as Example 5 excepting that 0.5 g magnesium powder was added in raw material.
The obtained anode material includes a core of the silicon-based material containing Si, $SiO_x$ (1.5≥x≥0.5), and $B_2O_3$-$SiO_2$, and a carbon layer coated on surface of the core of the silicon-based material, where the carbon layer contains boron element, and is deposited with magnesium oxide, magnesium hydroxide, and a small amount of magnesium carbonate. The carbon layer has a morphology of flat morphology structure, and magnesium salt particles can also be observed. The anode material has a median particle size of 5.0 $\mu$m, a powder conductivity of 7.3 S/m, $I_{1350}/I_{1580}$=0.9, and $I_{510}/I_{1350}$=4.10.

Example 15

The example was conducted as Example 1 excepting that "heating by water bath thermostat at 50°C for 3 h, 70°C for 3 h, and 85°C for 3 h" was replaced by "heating by water bath thermostat at 85°C for 9 h".
The obtained anode material includes a core of the silicon-based material containing Si, $SiO_x$ (1.5≥x≥0.5), and lithium silicate, and a carbon layer coated on surface of the core of the silicon-based material. The carbon layer has a morphology of cone-shaped structure. The anode material has a median particle size of 5.0 $\mu$m, a powder conductivity of 10.5 S/m, $I_{1350}/I_{1580}=1.3$, and $I_{510}/I_{1350}=3.27$.

Example 16

The example was conducted as Example 1 excepting that the amount of metal lithium added was 2.0 g.
The obtained anode material includes a core of the silicon-based material containing Si, $SiO_x$ ($1.5 \geq x \geq 0.5$), and lithium silicate, and a carbon layer coated on surface of the core of the silicon-based material. The carbon layer has a morphology of cone-shaped structure. The anode material has a median particle size of 5.0 $\mu$m, a powder conductivity of 6.3 S/m, $I_{1350}/I_{1580}=1.3$, and $I_{510}/I_{1350}=3.57$.

Example 17

The example was conducted as Example 2 excepting that the amount of the copper phthalocyanine added was 4.0 g.
The obtained anode material includes a core of the silicon-based material containing Si, $SiO_x$ ($1.5 \geq x \geq 0.5$) and Si-Cu alloy, and a carbon layer coated on surface of the core of the silicon-based material. The carbon layer has a morphology of petal-like structure. The anode material has a median particle size of 5.0 $\mu$m, a powder conductivity of 15.3 S/m, $I_{1350}/I_{1580}=1.93$, and $I_{510}/I_{1350}=3.61$.

Comparative Example 1

SiO (10 g) was directly adopted as the anode material.

Comparative Example 2

A silicon-oxygen raw material SiO (10 g) was carbon coated with hydrocarbon organic carbon source, alkene organic carbon source, or alkyne organic carbon source by vapor deposition method, while reducing the metal, and after natural cooling, the anode material was obtained.
The obtained anode material includes a core of the silicon-based material containing Si and $SiO_x$, and a carbon coating layer coated on surface of the core of the silicon-based material. As shown in FIG. 4(e), the surface of the carbon coating has a flat morphology.

Comparative Example 3

After adding 1 g of CuCh into 10 g of deionized water and completely dissolving, a silicon-oxygen raw material SiO (10 g) was added, the anode material was obtained by stirring magnetically for 12 h, heating in a water bath at 60°C and stirring for 2 h, then filtering under reduced pressure and drying, carbon coating with hydrocarbon organic carbon source, alkene organic carbon source, or alkyne organic carbon source by vapor deposition method, while reducing the metal, and natural cooling.

Comparative Example 4

After adding 1 g of $FeCl_2$ into 10 g of deionized water and completely dissolving, a silicon-oxygen raw material SiO (10 g) was added, the anode material was obtained by stirring magnetically for 12 h, heating in a water bath at 60°C and stirring for 2 h, then filtering under reduced pressure and drying, carbon coating with hydrocarbon organic carbon source, alkene organic carbon source, or alkyne organic carbon source by vapor deposition method, while reducing the metal, and natural cooling .

Performance Testing:

1. SEM was adopted to characterize microstructure of the anode material.
2. EDS was adopted to characterize elemental composition in the anode material.
3. A Malvern particle size analyzer was adopted to test particle size of the material. For $D_{min}$ and $D_{max}$ in the present disclosure, particle size of the core of the silicon-based material could be measured after removing the first coating layer. For example, when the first coating layer was a carbon layer, the carbon layer could be removed by burning. The particle size measured after removing the first coating layer could be considered as the particle size of the particle before coating.

4. $CO_2$ spectroscopy was adopted to burn the anode material to test carbon content of the anode material.

5. XRD was adopted to calculate grain sizes of crystalline silicon, silicate, and silicon alloy.

6. A micropore size distribution method was adopted to test pore volume $\Delta V$ of the anode material, true density P of the anode material was tested, and porosity of the anode material = $\Delta V/(\Delta V+1/P)$.

7. A Micromeritics Tristar3020 specific surface area and pore size analyzer was adopted to test specific surface area of the anode material. A certain mass of powder was weighed, and complete degassed under vacuum heating. After removing surface adsorbate, specific surface area of the particles was calculated by amount of adsorbed nitrogen using nitrogen adsorption method.

8. The powder conductivity was tested by a Mitsubishi Chemical MCP-PD51 powder resistivity tester. Test conditions: putting a certain amount of powder material into sample cell; and testing conductivity of the powder under a certain pressure, the unit is S/cm.

9. A Raman spectroscopy was adopted to test Raman spectrum with a test range of 800 $cm^{-1}$ to 2000 $cm^{-1}$.

10. The following method was adopted to test the electrochemical performance:

An anode piece of button battery was prepared by a method known in the art and the BTRTC/ZY/01-020 button battery method. The prepared button battery was charged and discharged on a LAND battery tester under normal temperature condition at a constant current of 0.2C, and the charge and discharge voltage were limited to 2.75 V to 4.2 V. Initial reversible capacity, initial cycling charge capacity, and initial cycling discharge capacity were obtained.

$$\text{Initial coulombic efficiency} = \text{the initial cycling discharge capacity} / \text{the initial cycling charge capacity}.$$

The cycling was repeated for 50 times, and the discharge capacity was recorded as remaining capacity of the lithium ion battery. Capacity retention = the remaining capacity / the initial capacity*100%.

Testing of pole piece expansion rate (%) after 50 cycles: mixing the anode material with graphite to formulate a definite capacity (450 mAh/g); coating to obtain a pole piece, testing thickness d1 of the pole piece; then assembling into a button battery for a test; after cycling for 50 times, disassembling the battery and testing thickness d2 of the pole piece again.

$$\text{Pole piece expansion rate} = (d2-d1)/d1*100\%.$$

Under slight difference proportion due to difference capacity of each materials, capacity of the mixed products were set to a standard capacity of 480 mAh/g. Rate tests under 0.5C, 1.0C, and 2.0C were performed respectively. The test results are shown in Table 1 to Table 3.

Table 1: The particle size test of Examples and Comparative Examples

| Experimental Items | $D_{50}$ | $D_{Si}$ | Dsilicate/$D_{Si}$ | Dsilicon alloy/$D_{Si}$ |
|---|---|---|---|---|
| Comparative Example 1 | 5.07 | 3.09 | / | / |
| Comparative Example 2 | 5.01 | 4.11 | / | / |
| Comparative Example 3 | 4.99 | 4.34 | / | / |
| Comparative Example 4 | 5.03 | 4.01 | / | 0.02 |
| Example 1 | 5.02 | 5.72 | 1.39 | / |
| Example 2 | 5.01 | 4.22 | / | 0.16 |
| Example 3 | 4.98 | 4.53 | 0.44 | / |
| Example 4 | 4.97 | 4.27 | / | / |
| Example 5 | 5.03 | 4.22 | / | / |
| Example 6 | 5.01 | 4.13 | 0.39 | / |

(continued)

| Experimental Items | $D_{50}$ | $D_{Si}$ | Dsilicate/$D_{Si}$ | Dsilicon alloy/$D_{Si}$ |
|---|---|---|---|---|
| Example 7 | 4.96 | 5.84 | 1.15 | / |
| Example 8 | 4.99 | 4.09 | / | 0.05 |
| Example 9 | 5.01 | 4.19 | / | / |
| Example 10 | 4.98 | 4.08 | / | / |
| Example 11 | 5.03 | 4.01 | / | / |
| Example 12 | 5.09 | 4.09 | / | / |
| Example 13 | 4.97 | 4.22 | / | / |
| Example 14 | 4.96 | 4.12 | / | / |
| Example 15 | 5.04 | 6.01 | 1.41 | / |
| Example 15 | 4.97 | 6.01 | 5.07 | / |
| Example 16 | 5.01 | 6.01 | / | 2.09 |
| Example 17 | 4.98 | 5.99 | / | 2.05 |

Table 2: Electrochemical performance tests of anode materials prepared by Examples and Comparative Examples

| Experimenta l Items | Initial Efficie ncy | Reversib le Capacity (mAh/g) | Carbon Conten t (%) | Specific Surface Area (m$^2$/g) | Pore Diamet er (nm) | 0.5C/0. 2C Charge Rate | 1.0C/0. 2C Charge Rate | 2.0C/0. 2C Charge Rate | Undulation y of the First Coating Layer |
|---|---|---|---|---|---|---|---|---|---|
| Comparative Example 1 | 64.24 | 1225.1 | 0.43 | 2.83 | / | 85.0% | 73.1% | 60.9% | / |
| Comparative Example 2 | 76.29 | 1571.3 | 5.47 | 2.36 | 19.32 | 93.5% | 87.2% | 76.4% | 0.079 |
| Comparative Example 3 | 77.19 | 1516.9 | 5.16 | 2.55 | 22.03 | 92.9% | 87.3% | 76.2% | 0.092 |
| Comparative Example 4 | 78.32 | 1491.3 | 5.25 | 2.60 | 21.88 | 94.5% | 89.2% | 81.9% | 0.080 |
| Example 1 | 86.71 | 1381.7 | 1.21 | 3.13 | 23.97 | 96.5% | 90.2% | 83.7% | 0.258 |
| Example 2 | 76.32 | 1316.8 | 1.01 | 3.66 | 53.22 | 97.9% | 92.3% | 87.0% | 0.660 |
| Example 3 | 79.31 | 1357.2 | 0.93 | 3.47 | 32.72 | 97.3% | 91.1% | 85.8% | 0.313 |
| Example 4 | 77.39 | 1674.2 | 0.90 | 2.45 | 22.09 | 95.9% | 89.9% | 83.3% | 0.228 |
| Example 5 | 78.11 | 1653.1 | 1.03 | 2.77 | 23.07 | 96.1% | 90.3% | 83.2% | 0.233 |
| Example 6 | 78.55 | 1621.3 | 0.86 | 2.90 | 29.11 | 96.3% | 90.9% | 84.1% | 0.179 |
| Example 7 | 84.31 | 1239.2 | 1.35 | 2.83 | 23.97 | 95.3% | 89.9% | 83.3% | 0.258 |
| Example 8 | 76.85 | 1322.5 | 1.19 | 3.92 | 42.22 | 98.1% | 92.7% | 87.9% | 0.805 |
| Example 9 | 70.94 | 1311.2 | 0.79 | 2.78 | 13.23 | 87.1% | 76.3% | 69.1% | 0.079 |
| Example 10 | 71.33 | 1321.9 | 0.80 | 2.81 | 15.99 | 87.3% | 76.1% | 70.5% | 0.099 |
| Example 11 | 76.22 | 1597.3 | 1.13 | 2.31 | 23.40 | 95.1% | 89.5% | 83.7% | 0.245 |
| Example 12 | 75.39 | 1452.1 | 1.33 | 2.01 | 17.40 | 91.3% | 87.9% | 81.1% | 0.132 |
| Example 13 | 63.39 | 1352.1 | 1.51 | 1.41 | 11.90 | 90.2% | 87.0% | 80.5% | 0.092 |
| Example 14 | 65.77 | 1131.2 | 1.37 | 1.51 | 10.170 | 85.9% | 79.3% | 70.1% | 0.083 |
| Example 15 | 86.55 | 1383.7 | 1.19 | 3.35 | 26.33 | 96.0% | 89.7% | 83.9% | 0.250 |
| Example 16 | 93.22 | 973.2 | 1.25 | 3.20 | 23.58 | 86.3% | 80.1% | 74.3% | 0.243 |
| Example 17 | 75.91 | 607.2 | 1.57 | 3.71 | 57.06 | 98.3% | 93.0% | 88.2% | 0.692 |

Table 3: Cycling capacity retention and pole piece expansion of button battery of the anode materials prepared by Examples and Comparative Examples

| | Compa rative Examp le 1 | Compa rative Examp le 2 | Compa rative Examp le 3 | Compa rative Examp le 4 | Examp le 1 | Examp le 2 | Examp le 3 | Examp le 4 | Examp le 5 | Examp le 6 |
|---|---|---|---|---|---|---|---|---|---|---|
| Cycling Retention | 17.2% | 80.1% | 78.1% | 81.3% | 91.7% | 93.1% | 92.6% | 91.7% | 92.3% | 92.0% |
| Expansion Rate | 57.1% | 44.2% | 45.6% | 43.5% | 40.6% | 36.1% | 38.9% | 42.1% | 38.5% | 37.2% |
| | Examp le 7 | Examp le 8 | Examp le 9 | Examp le 10 | Examp le 11 | Examp le 12 | Examp le 13 | Examp le 14 | Examp le 15 | Examp le 16 |
| Cycling Retention | 91.8% | 93.0% | 92.1% | 92.5% | 92.6% | 92.8% | 92.5% | 90.9% | 91.0% | 85.3% |
| Expansion Rate | 39.5% | 38.5% | 41.3% | 41.7% | 39.5% | 38.5% | 39.2% | 42.3% | 40.9% | 41.1% |
| | Examp le 17 | | | | | | | | | |
| Cycling Retention | 87.9% | | | | | | | | | |
| Expansion Rate | 39.9% | | | | | | | | | |

Through data of Table 1 to Table 3 of the test results of Comparative Examples and Examples, it can be found that the anode material of the present disclosure includes a core of the silicon-based material, and a first coating layer coated on at least part of surface of the core of the silicon-based material. The undulation y of the coating layer is between 0.1 and 1, showing scope and space that conductive carbon in the first coating layer can expand, and ensuring that in the process of expansion and shrinkage of the anode material, the contact area of the anode material with conductive agent can be increased during preparing slurry or electrode piece, maintaining electronic pathway connection between the core of the silicon-based material and the conductive agent, which is beneficial to improve conductivity, cycling performance, and rate performance of the anode material. The irreversible expansion is suppressed by stabilizing SEI interface, reducing pulverization, and reducing the occurrence of side reactions.

As shown in FIG. 2, the anode material of Comparative Example 1 has no carbon layer, and no carbon layer is found from element distribution of SEM and EDS. The carbon content of the anode material of Comparative Example 1 is very low and much lower than other comparative examples, while due to the organic carbon source by metallization in Example 1, the carbon content in finished product is increased to 1.21%. As shown in FIG. 3, according to the EDS photos of Example 1, it can be seen that the surface of the core of the silicon-based material has been coated with a carbon layer, indicating that the carbon layer is successfully synthesized.

In Example 1, the reversible capacity and the initial coulombic efficiency of the sample reach 1381.7 mAh/g and 86.71%, respectively, far superior to the electrochemical performance of the conventional carbon-coated silicon-oxygen material SiO@C (Comparative Example 2, with an initial efficiency of 76.4%), indicating that in the preparation method of the present disclosure, the metal source and the carbon layer both play roles in improving the performance of the synthesized anode material. The present disclosure improves the initial efficiency of the material while improving and simplifying process, and realizes the process improvement.

Comparing with Example 1, with respect to the samples doped with several metals with lower reducibility (Cu and Fe) in Comparative Example 3 and 4, the effects of these lowreducing metals for improving initial efficiency and rate performance of the material is relatively weak (Table 2). And in Comparative Example 3 and Comparative Example 4, the method of chemical vapor deposition is adopted for carbon coating, which can achieve a coating layer with high carbon content while reducing metals. The chemical vapor deposition forms carbon free radicals at high temperatures through external organic carbon source, the carbon content is much higher than that of a spontaneous adsorption crystallization sample.

From the carbon content, it can be found that metal doping can be performed by metal complex or precipitation method. When organic metal complex is used for doping, its organic carbon ends are heat-treated at high temperature, thus completing carbon coating effect while doping. From the EDS photos of FIG. 3, it can be found that in Example 1, the presence of a carbon layer is observed at the same time as the metal doping by the organic metal complex. In contrast, Example 2, which also uses metal complexes for core doping and carbon layer coating, cannot form silicate due to the low activity of Cu element. Therefore, during the heat treatment, Cu is reduced by carbon to metal copper (0-valent), and the copper part and the silicon-based part form a silicon-copper alloy. For Cu metal organic compounds, stacking and crystallizing of organic metal complex during deposition forms a prototype of special hilly honeycomb structure, which forms a carbon layer morphology with honeycomb hilly structure as shown in FIG. 4(b) after burning by the heat treatment. The above structure has greatly increased contact area between conductive carbon and conductive network, and its increased effective contact scope is beneficial to bonding through Si-metal and metal-C chemical bonds during expansion and shrinkage of the carbon layer, maintaining electronic pathway connection between active silicon and conductive agent, which facilitates improving cycling retention of the material, and reduces pulverization and occurrence of side reaction by stabilizing SEI interface, and suppressing irreversible expanding. At the same time, the carbon-coated anode material of the present disclosure has a large surface contact scope. Unlike carbon fiber, the anode material of the present disclosure has a vertical layered carbon coating (carbon nanotube can be grown on surface of the carbon coating layer), which can maintain 3D expanded morphology during charging and discharging, and can maintain carbon morphology during cycling, thereby maintaining a large conductive contact area. The porous periphery can increase infiltration depth of electrolyte and shorten diffusion path of lithium ions, thereby improving rate performance.

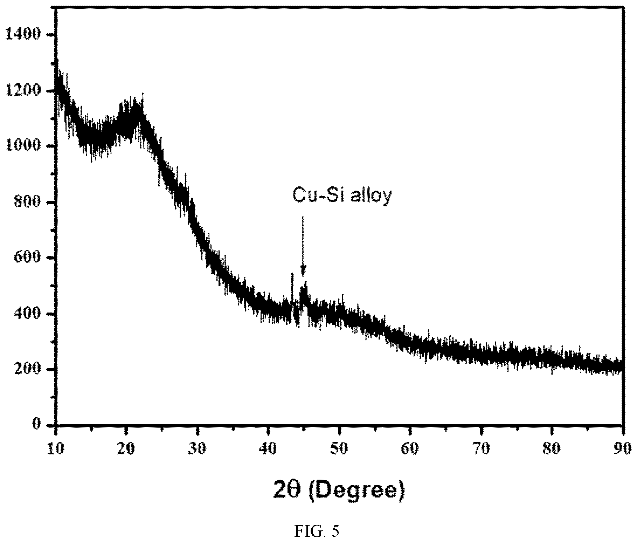

As shown in FIG. 5, the presence of copper-silicon alloy can be found in the XRD pattern of the anode material of Example 1, which also proves that doped Cu is also successfully introduced into the core and changes composition of the core. While the peripheral copper is reduced and penetrates the whole electronic transport pathway to realize improvement of electronic conductivity.

In summary, the anode material prepared by the present disclosure has achieved a breakthrough in improvement of rate performance and expansion performance.

From Table 3, it can be found from cycling expansion data of button battery that several different metals have widely different varying trends. From the cycling capacity retention, the highly reducing material is almost the same as the samples in comparative examples, indicating that the highly reducing metal has certain advantages in highlighting the high initial efficiency, but the contribution to the cycling retention is not large, because the carbon coating layers are not well optimized. For example, the capacity retentions of Comparative Example 1, Comparative Example 2, and Comparative Example 3 are 80.9%, 78.7% and 78.1%, respectively, indicating that silicate has little effect on capacity retention. But on the other hand, the carbon coating layer formed by the organic carbon can play a good role in conductivity. On this basis, the capacity retentions of the multilayer coated anode materials such as in Examples 1, 2 and 3 are 91.7%, 93.1% and 92.6%, respectively. The capacity retentions have been greatly improved. From the expansion, the alloy layer has a certain suppressing effect on the material expansion, which reduces the cycling expansion. From the pole piece expansion data after 50 cycles of Example 2, compared with the data of conventional sample (Comparative Example 2), the pole piece expansion of button battery drops from 44.2% to 36.1%.

The above descriptions are only preferred embodiments of the present disclosure, and are not intended to limit the present disclosure. For those skilled in the art, there may be various modifications and changes in the present disclosure. Any modifications, equivalent replacements, improvements, etc. made within the spirit and principles of the present disclosure shall be included within the protection scope of the present disclosure.

**Claims**

1. An anode material, **characterized in that** the anode material comprises a core of a silicon-based material and a first coating layer coated on at least a surface of the core, wherein the first coating layer has an undulation y of 1ulation yand the undulation y of the first coating layer is expressed by Formula (I):

$$y = 1 - \exp\left(-\frac{(R_{max} - R_{min})}{D50} \times C\right) \qquad (I)$$

   in Formula (I), $R_{max}$ is a maximum thickness (nm) of the first coating layer, $R_{min}$ is a minimum thickness (nm) of the first coating layer, D50 is a median particle size ($\mu$m) of the anode material, and C is a mass ratio (%) of the first coating layer in the anode material.

2. The anode material according to claim 1, **characterized in that** the anode material comprises at least one of the following features (1) to (7):

   (1) the core of the silicon-based material includes crystalline silicon and silicide, and the silicide includes at least one of $SiO_x$, silicon dioxide, silicate, and silicon alloy, where $1.5 \geq x \geq 0.5$;
   (2) the core of the silicon-based material includes crystalline silicon and silicide, and the silicide includes at least one of $SiO_x$, silicon dioxide, silicate, and silicon alloy, where $1.5 \geq x \geq 0.5$, and the crystalline silicon has a grain size Dsi of 2.5 nm to 15 nm;
   (3) the core of the silicon-based material includes crystalline silicon and silicide, and the silicide includes at least one of $SiO_x$, silicon dioxide, silicate, and silicon alloy, where $1.5 \geq x \geq 0.5$, and a grain size of the crystalline silicon is Dsi, a grain size of the silicate is $D_{silicate}$, and $D_{silicate}/D_{Si}$=0.3 to 5.0;
   (4) the core of the silicon-based material includes crystalline silicon and silicide, and the silicide includes at least one of $SiO_x$, silicon dioxide, silicate, and silicon alloy, where $1.5 \geq x \geq 0.5$, and a grain size of the crystalline silicon is Dsi, a grain size of the silicon alloy is $D_{silicon\ alloy}$, and $D_{silicon\ alloy}/D_{Si}$=0 to 2.0;
   (5) the core of the silicon-based material includes crystalline silicon and silicide, and the silicide includes at least one of $SiO_x$, silicon dioxide, silicate, and silicon alloy, where $1.5 \geq x \geq 0.5$, and the silicon alloy includes at least one of silicon-iron alloy, silicon-silver alloy, silicon-nickel alloy, silicon-cobalt alloy, silicon-manganese alloy, silicon-indium alloy, silicon-rhodium alloy, silicon-ruthenium alloy, silicon-iridium alloy, silicon-platinum alloy, silicon-titanium alloy, and silicon-molybdenum alloy;
   (6) the core of the silicon-based material includes crystalline silicon and silicide, and the silicide includes at least one of $SiO_x$, silicon dioxide, silicate, and silicon alloy, where $1.5 \geq x \geq 0.5$, and a cation of the silicate includes a metal element; and
   (7) the core of the silicon-based material has a median particle size of 1 $\mu$m to 13 $\mu$m.

3. The anode material according to claim 1, **characterized in that** the anode material comprises at least one of the following features (1) to (8):

   (1) the first coating layer includes a carbon layer, and a material of the carbon layer includes at least one of amorphous carbon, graphite, soft carbon, and hard carbon;
   (2) the first coating layer comprises an organic polymer material layer, and a material of the organic polymer material layer includes at least one of polyamine compound, polyester compound, and polyolefin compound;

(3) a surface morphology of the first coating layer includes at least one of petal shape, stripe shape, cone shape, and granular shape;

(4) the first coating layer has a thickness of 10 nm to 500 nm;

(5) the first coating layer has pores with a pore diameter of 10 nm to 60 nm;

(6) the first coating layer has a porosity of 0.5% to 15%;

(7) the core of the silicon-based material includes a first dopant element, and the first dopant element includes at least one of lithium, magnesium, sodium, copper, platinum, iron, manganese, cobalt, nickel, indium, silver, gold, titanium, molybdenum, aluminum, palladium, calcium, iridium, chromium, gallium, rhodium, and ruthenium; and

(8) the first coating layer includes a second dopant element, and the second dopant element includes at least one of nitrogen, fluorine, phosphorus, sulfur, and boron.

4. The anode material according to claim 1, **characterized in that** a second coating layer is further provided between the core of the silicon-based material and the first coating layer.

5. The anode material according to claim 4, **characterized in that** the second coating layer comprises at least one of the following features (1) to (3):

(1) a material of the second coating layer includes silicon alloy;

(2) a material of the second coating layer includes silicon alloy, and the silicon alloy includes at least one of silicon-iron alloy, silicon-silver alloy, silicon-nickel alloy, silicon-cobalt alloy, silicon-manganese alloy, silicon-indium alloy, silicon-rhodium alloy, silicon-ruthenium alloy, silicon-iridium alloy, silicon-platinum alloy, silicon-titanium alloy, and silicon-molybdenum alloy; and

(3) the second coating layer has a thickness of 0 nm to 10 nm but excluding 0 nm.

6. The anode material according to claim 1, **characterized in that** the anode material comprises at least one of the following features (1) to (5):

(1) in a Raman spectrum of the anode material measured by a Raman spectroscopy, a ratio of a strongest peak intensity $I_1$ of the anode material at 1300 cm$^{-1}$ to 1400 cm$^{-1}$ to a strongest peak intensity $I_2$ of the anode material at 1550 cm$^{-1}$ to 1650 cm$^{-1}$ satisfying $0<I_1/I_2<3$, and a ratio of a strongest peak intensity $I_3$ of the anode material at 480 cm$^{-1}$ to 540 cm$^{-1}$ to the strongest peak intensity $I_1$ of the anode material at 1300 cm$^{-1}$ to 1400 cm$^{-1}$ satisfying $1<I_3/I_1<4.5$;

(2) the anode material has a median particle size D50 of 1.5 $\mu$m to 15 $\mu$m;

(3) the anode material has a carbon content of 0.5% to 10%;

(4) the anode material has a powder conductivity of 0.1 S/m to 100 S/m; and

(5) the anode material has a specific surface area of 0.8 m$^2$/g to 10 m$^2$/g.

7. A preparation method of an anode material, **characterized in that** the preparation method comprises that:

mixing an organic carbon source, a silicon-based material, and an organic solvent to obtain a precursor; and subjecting the precursor to a heat treatment to obtain the anode material.

8. The preparation method according to claim 7, **characterized in that** the preparation method comprises at least one of the following features (1) to (7):

(1) the organic carbon source includes at least one organic substance selected from the group consisting of alkene, alkyne, alkane, alcohol, carboxylic acid, ester, aromatic ring, ketone, and ether;

(2) the organic carbon source includes at least one of p-dimethylbiphenyl, polyacrylic acid, phthalocyanine, diphenyl ether, polyvinyl acetate, ethyl stearate, and dopamine;

(3) the organic carbon source includes at least one organic substance of nitrile, amine, nitro compound, sulfide, fluoride, boride, and phosphide which containing at least one of hydroxyl, carboxyl, aromatic ring, branched alkyl, and carbonyl group;

(4) the organic carbon source includes at least one of 5-chloro-2-ethoxyphenylboronic acid, diphenyl sulfide, dopamine, and phthalocyanine;

(5) the organic carbon source includes an organic polymer material, and the organic polymer material includes at least one of polyamine compound, polyester compound, and polyolefin compound;

(6) the organic carbon source includes a metal coordination compound; and

(7) the organic carbon source includes a metal coordination compound, and the metal coordination compound includes at least one of copper phthalocyanine, aluminum acetylacetonate, tricyclic tin, and cobalt isopropoxide.

9. The preparation method according to claim 7, **characterized in that** the organic carbon source includes a metal coordination compound obtained by complexing an organic carbon material with a metal source.

10. The preparation method according to claim 9, **characterized in that** the preparation method comprises at least one of the following features (1) to (3):

(1) the metal source includes at least one of lithium source, magnesium source, sodium source, copper source, iron source, manganese source, cobalt source, nickel source, indium source, silver source, gold source, titanium source, molybdenum source, aluminum source, palladium source, calcium source, iridium source, platinum source, gallium source, chromium source, rhodium source, and ruthenium source;
(2) the organic carbon material includes at least one of alcohol, ether, aromatic compound, pyrrole, pyridine, alkane, ketone, carboxylic acid, nitrile, organic amine, nitro organic compound, sulfur-containing organic compound, and phosphorus-containing organic compound; and
(3) a molar ratio of the metal source to the organic carbon material is (0 to 1): 1 but excluding 0.

11. The preparation method according to claim 7, **characterized in that** the preparation method comprises at least one of the following features (1) to (6):

(1) the silicon-based material includes at least one of Si, $SiO_x$, and $SiO_2$, where $1.5 \geq x \geq 0.5$;
(2) a mass ratio of the silicon-based material to the organic carbon source is 1 :(0.05 to 0.3);
(3) a mass ratio of the silicon-based material to the organic solvent is 1:(1 to 2.5);
(4) the organic solvent includes at least one of dimethyl carbonate, tetrahydrofuran, carbonate, toluene, benzene, diethyl ether, propylene oxide, ketone, and ethylene glycol dimethyl ether;
(5) the organic carbon source, the silicon-based material, and the organic solvent are mixed under stirring; and
(6) a duration for mixing the organic carbon source, the silicon-based material, and the organic solvent is 3 h to 24 h.

12. The preparation method according to claim 7, **characterized in that** after mixing the organic carbon source, the silicon-based material, and the organic solvent, the method further includes: a step of evaporating and crystallizing a mixed material.

13. The preparation method according to claim 12, **characterized in that** the preparation method comprises at least one of the following features (1) to (4):

(1) a temperature for evaporating and crystallizing is 30°C to 80°C;
(2) a duration for evaporating and crystallizing is 3 h to 10 h;
(3) the evaporating and crystallizing is performed in a first protective atmosphere; and
(4) the evaporating and crystallizing is performed in a first protective atmosphere, and the first protective atmosphere includes at least one of argon and nitrogen.

14. The preparation method according to claim 7, **characterized in that** the preparation method comprises at least one of the following features (1) to (5):

(1) the heat treatment has a temperature of 400°C to 1200°C;
(2) the heat treatment has a heating rate of 1°C/min to 5°C/min;
(3) the heat treatment has a duration of 3 h to 12 h;
(4) the heat treatment is performed in a second protective atmosphere, and the second protective atmosphere includes argon; and
(5) the heat treatment has a pressure of 0.11 MPa to 0.25 MPa.

15. A lithium ion battery, **characterized in that** the lithium ion battery comprises the anode material according to any one of claims 1 to 6, or the anode material prepared by the preparation method according to any one of claims 7 to 14.

mixing a coating material, a silicon-based material, and an organic solvent to obtain a precursor

S100

subjecting the precursor to a heat treatment to obtain the anode material

S200

FIG. 1

**EDS layered photo 387**   **electron microscope image 404**   C Kα1_2

O Kα1   Si Kα1

FIG. 2

**EDS layered photo 385**     **electron microscope image 402**     C Kα1_2

10µm     10µm     10µm

O Kα1     Si Kα1

10µm     10µm

FIG. 3

FIG. 4

FIG. 5

<div align="center">**INTERNATIONAL SEARCH REPORT**</div>

| International application No. |
|---|
| **PCT/CN2023/075339** |

**A.    CLASSIFICATION OF SUBJECT MATTER**

H01M4/134(2010.01)i;H01M4/139(2010.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 负极, 硅, 包覆, 碳源, 金属, 配位, anode, coat, carbon, complex, metal

**C.    DOCUMENTS CONSIDERED TO BE RELEVANT**

| Category* | Citation of document, with indication, where appropriate, of the relevant passages | Relevant to claim No. |
|---|---|---|
| X | CN 103311515 A (LIU JIANHONG) 18 September 2013 (2013-09-18) description, paragraphs [0005]-[0033] | 1-3, 6, 7, 11-15 |
| Y | CN 103311515 A (LIU JIANHONG) 18 September 2013 (2013-09-18) description, paragraphs [0005]-[0033] | 4, 5, 8-10 |
| Y | CN 109755519 A (HUNAN ZHONGKE SHINZOOM CO., LTD.) 14 May 2019 (2019-05-14) description, paragraphs [0005]-[0026] | 4, 5, 8-10 |
| A | CN 110739446 A (XIAMEN GAORONG NEW ENERGY TECHNOLOGY CO., LTD.) 31 January 2020 (2020-01-31) description, paragraphs [0007]-[0031] | 1-15 |
| A | CN 113659141 A (HUNAN KINGI TECHNOLOGY CO., LTD.) 16 November 2021 (2021-11-16) description, paragraphs [0006]-[0028] | 1-15 |
| A | CN 114373907 A (GUANGDONG BRUNP RECYCLING TECHNOLOGY CO., LTD. et al.) 19 April 2022 (2022-04-19) description, paragraphs [0005]-[0079] | 1-15 |

☑ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 March 2023** | **03 April 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
|---|
| **PCT/CN2023/075339** |

**C.    DOCUMENTS CONSIDERED TO BE RELEVANT**

| Category* | Citation of document, with indication, where appropriate, of the relevant passages | Relevant to claim No. |
|---|---|---|
| A | US 2014057176 A1 (SAMSUNG SDI CO., LTD.) 27 February 2014 (2014-02-27) description, paragraphs [0033]-[0105] | 1-15 |

Form PCT/ISA/210 (second sheet) (July 2022)

INTERNATIONAL SEARCH REPORT
Information on patent family members

International application No.

**PCT/CN2023/075339**

| Patent document cited in search report | | | Publication date (day/month/year) | Patent family member(s) | | | Publication date (day/month/year) |
|---|---|---|---|---|---|---|---|
| CN | 103311515 | A | 18 September 2013 | CN | 103311515 | B | 19 August 2015 |
| CN | 109755519 | A | 14 May 2019 | | None | | |
| CN | 110739446 | A | 31 January 2020 | CN | 110739446 | B | 20 April 2021 |
| CN | 113659141 | A | 16 November 2021 | | None | | |
| CN | 114373907 | A | 19 April 2022 | | None | | |
| US | 2014057176 | A1 | 27 February 2014 | US | 9088045 | B2 | 21 July 2015 |
| | | | | KR | 20140026855 | A | 06 March 2014 |
| | | | | KR | 101724012 | B1 | 07 April 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022104320997